(19) Europäisches Patentamt
European Patent Office
Office européen des brevets

(11)　EP 2 950 186 A1

(12)　**EUROPEAN PATENT APPLICATION**
published in accordance with Art. 153(4) EPC

(43) Date of publication:
02.12.2015　Bulletin 2015/49

(21) Application number: 14742944.3

(22) Date of filing: 24.01.2014

(51) Int Cl.:
*G06F 3/041* (2006.01)　　*G06F 3/044* (2006.01)

(86) International application number:
PCT/JP2014/051475

(87) International publication number:
WO 2014/115831 (31.07.2014 Gazette 2014/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority:　24.01.2013　JP 2013011262

(71) Applicant: **Toppan Printing Co., Ltd.**
**Tokyo 110-0016 (JP)**

(72) Inventor: **HASHIDA, Yasunori**
**Tokyo 110-0016 (JP)**

(74) Representative: **TBK**
**Bavariaring 4-6**
**80336 München (DE)**

(54)　**TOUCH PANEL AND DISPLAY DEVICE**

(57)　A touch panel is provided with a sensing substrate as a transparent dielectric layer; sensing electrode wirings (51) as a plurality of first electrode wirings arranged, on the front surface of the transparent dielectric layer, repeatedly along a first direction with intervals therebetween; and drive electrode wirings as a plurality of second electrode wirings (41) arranged, on the reverse surface of the transparent dielectric layer, repeatedly along a second direction with intervals therebetween. At least a part of the plurality of first electrode wirings is a bending line having a plurality of bending sections (54) provided repeatedly along the Y-direction in which the first electrode wirings extends. When viewing from the surface of the transparent dielectric layer, each of the plurality of first electrode wirings crosses each of the plurality of second electrode wirings and at least part of the plurality of bending sections (54) faces the intervals between the second electrode wirings.

Fig. 7

## Description

[Technical Field]

A technique according to the present disclosure relates to a touch panel having a plurality of electrode wirings and a display apparatus provided with the touch panel.

[Background Art]

In recent years, as an input device of electrical equipment, electrostatic capacitive type touch panels have been widely used. The electrostatic capacitive type touch panel is provided with a plurality of first electrode wirings extended in a X-direction and a plurality of second electrode wirings extended in a Y-direction perpendicular to the X-direction. The plurality of first electrode wirings and the plurality of second wirings are stacked with a transparent dielectric layer sandwiched thereby. A change in electrostatic capacitance between one first electrode wiring and each of the plurality of second electrode wirings is detected for every first electrode wiring, thereby detecting the contact location of a finger on the operation surface of the touch panel. As for a material for forming the first electrode wiring and the second electrode wiring, to reduce resistance of the first electrode wiring and the second electrode wiring, metal such as silver or copper has been employed (e.g., refer to patent literature 1).

[Citation List]

[Patent Literature]

[Patent Literature 1]
Japanese Patent Application Laid-Open Publication No. 2012-79238

[Summary of the invention]

[Technical Problem]

Meanwhile, according to a configuration in which the first electrode wiring or the second electrode wiring are formed by metal that absorbs or reflects visible light, when viewing from the operation surface of the touch panel, a lattice-like pattern in which the plurality of first electrode wirings and the plurality of second electrode wirings orthogonally cross with each other can be recognized. On the other hand, even in a display panel where touch panels are laminated, a black matrix that divides a plurality of pixels along the X-direction and the Y-direction can be recognized as a lattice-like pattern.
In this case, generally, intervals between mutually adjacent first electrode wirings are different from intervals between mutually adjacent pixels in the Y-direction and also, intervals between mutually adjacent second electrode wirings are different from intervals between mutually adjacent pixels in the X-direction. As a result, when viewing from the operation panel of the touch panel, the lattice-like pattern formed by the first electrode wiring and the second electrode wiring and the lattice-like pattern that divides the pixels are overlapped so that an interference fringe caused by two lattice-like patterns is likely to be seen.
The purpose of the technique according to the present disclosure is to provide a touch panel capable of reducing an occurrence of interference fringes and a display apparatus.

[Solution to Problem]

An aspect of the touch panel according to a technique in the present disclosure includes a transparent dielectric layer; a plurality of first electrode wirings arranged, on a front surface of the transparent dielectric layer, repeatedly along a first direction with intervals therebetween; and a plurality of second electrode wirings arranged, on a reverse surface of the transparent dielectric layer, repeatedly along a second direction with intervals therebetween. At least a part of the plurality of first electrode wirings is a bending line having a plurality of bending sections arranged repeatedly in a direction along which the first electrode wiring extends. When viewing from the front surface of the transparent dielectric layer, each of the plurality of first electrode wirings crosses each of the plurality of second electrode wirings and at least a part of the plurality of bending sections faces the intervals between the second electrode wirings.
An aspect of the display apparatus according to a technique in the present disclosure is provided with a display panel having pixels arranged in a matrix and a touch panel stacked on the display panel. The touch panel includes a transparent dielectric layer; a plurality of first electrode wirings arranged, on a front surface of the transparent dielectric layer, repeatedly along a first direction with intervals therebetween; and a plurality of second electrode wirings arranged, on a reverse surface of the transparent dielectric layer, repeatedly along a second direction with intervals therebetween. At least a part of the plurality of first electrode wirings is a bending line having a plurality of bending sections arranged repeatedly in a direction along which the first electrode wiring extends. When viewing from the front surface of the transparent dielectric layer, each of the plurality of first electrode wirings crosses each of the plurality of second electrode wirings and at least a part of the plurality of bending sections faces the intervals between the second electrode wirings.
According to an aspect of the technique in the present disclosure, when viewing from the front surface of the transparent dielectric layer, a lattice-like pattern is formed by the first electrode wirings and the second electrode wirings. A pattern divided by two mutually adjacent first electrode wirings and two mutually adjacent second electrode wirings includes a shape including four points (vertexes) where the first electrode wiring and the second electrode wiring crosses with each other and the bending section, i.e., a shape different from quadrangle. Therefore, compared to a case where the lattice-like pattern is constituted with only quadruple, regularity in the lattice-like pattern becomes low. As a result, in a configuration in which a display panel having a periodical pattern corresponding to a pixel arrangement and a touch panel are stacked, the occurrence of interference fringes is reduced.

According to another aspect of the touch panel in the technique of the present disclosure, the bending line is a polygonal line formed by a plurality of linear sections combined with each other. When viewing from the front surface of the transparent dielectric layer, a pattern divided by two mutually adjacent first electrode wirings and two mutually adjacent second electrode wirings includes a polygon having five or more vertexes.

According to another aspect of the touch panel in the technique of the present disclosure, when viewing from the front surface of the transparent dielectric layer, a pattern divided by two mutually adjacent first electrode wirings and two mutually adjacent second electrode wirings includes a polygon having five or more vertexes. Therefore, similar to a case where the bending section is constituted as a curve having a curvature, compared to a configuration of a lattice-like pattern which is a pseudo quadrangle, regularity in the lattice-like pattern becomes low. As a result, occurrence of interference fringes is further reduced.

According to another aspect of the touch panel in the technique of the present disclosure, the bending line is a polygonal line formed by a plurality of linear sections combined from each other. When viewing from the front surface of the transparent dielectric layer, a pattern divided by two mutually adjacent first electrode wirings and two mutually adjacent second electrode wirings includes two or more types of polygons having mutually different numbers of vertexes among polygons having four to eight vertexes.

According to another aspect of the touch panel in the technique of the present disclosure, a pattern divided by two mutually adjacent first electrode wirings and two mutually adjacent second electrode wirings includes a plurality types of polygons. Accordingly, compared to a configuration of a lattice-pattern constituted by one type of polygon, regularity of in the lattice-like pattern becomes low. As a result, occurrence of interference fringes is further reduced.

According to another aspect of the touch panel in the technique of the present disclosure, the bending section is a first bending section and the bending line is a first bending line. Also, at least a part of the plurality of second electrode wirings is a second bending line having a plurality of second bending sections arranged repeatedly along a direction where the second electrode wiring extends. When viewing from the front surface of the transparent dielectric layer, at least a part of the plurality of second bending lines faces the intervals between the first electrode wirings.

According to another aspect of the touch panel in the technique of the present disclosure, a pattern divided by two mutually adjacent first electrode wirings and two mutually adjacent second electrode wirings includes, as a shape different from quadrangle, a shape including at least one of first bending section and second bending section. Thus, compared to a configuration in which a bending section constituted by a pattern different from the quadrangle uses only the first bending section, design flexibility in order to reduce the regularity of the lattice-like pattern can be enhanced.

[Advantageous Effects of Invention]

According to the technique of the present disclosure, interference fringes caused by the plurality of electrode wirings can be reduced.

[Brief Description of Drawings]

Fig .1 is a cross-sectional view showing an overall configuration of the display apparatus according to the first and second embodiments of the technique according to the present disclosure;
Fig. 2 is a planar view showing a planar structure of a color filter substrate included in the display panel according to the first and second embodiments;
Fig. 3 is a planar view showing a planar structure of a plurality of drive electrodes in the touch panel according to the first embodiment, together with a drive substrate;
Fig. 4 is an enlarged view of a part of Fig. 3, and is a planar view showing a planar structure of the drive electrode in the touch panel according to the first embodiment;
Fig. 5 is a planar view showing a planar structure of a plurality of sensing electrodes in the touch panel according to the first embodiment, together with a sensing substrate;
Fig. 6 is an enlarged view of a part of Fig. 5 with a planar view showing a planar structure of the sensing electrode in the touch panel according to the first embodiment;
Fig. 7 is a diagram viewed from a lamination direction, showing the drive electrode and the sensing electrode in the touch panel according to the first embodiment, and showing an enlarged view of a pattern produced by the drive electrode and the sensing electrode;
Fig. 8 is an enlarged planar view of the plurality of drive electrodes formed on the drive substrate in the touch panel according to the second embodiment;
Fig. 9 is an enlarged planar view of the plurality of sensing electrodes formed on the drive substrate in the touch panel according to the second embodiment;

Fig. 10 is a diagram viewed from a lamination direction, showing the drive electrode and the sensing electrode in the touch panel according to the second embodiment and showing an enlarged view of a pattern produced by the drive electrode and the sensing electrode;

Fig. 11 is a diagram viewed from a lamination direction, showing the drive electrode and the sensing electrode in the touch panel according to a modification example and showing an enlarged view of a pattern produced by the drive electrode and the sensing electrode;

Fig. 12 is a cross sectional view showing an overall configuration of a display apparatus according to a modification example; and

Fig. 13 is a cross sectional view showing an overall configuration of a display apparatus according to a modification example.

[Description of Embodiments]

(First Embodiment)

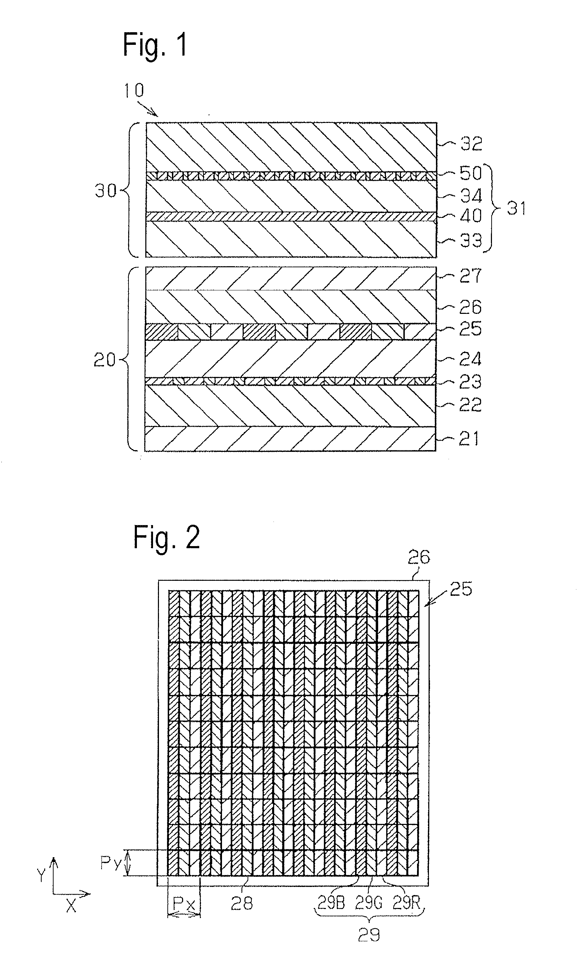

With reference to Figs. 1 to 6, hereinafter, a touch panel and a display apparatus according to the first embodiment are described. First, with reference to Fig. 1, an overall configuration of the display apparatus is described.

As shown in Fig. 1, a display apparatus 10 is provided with a display panel 20 and a touch panel 30 stacked on the display panel 20 via an adhesive member. The display panel 20 is a liquid crystal panel including a TFT (thin film transistor) substrate 22 and a color filter substrate 26 disposed between two deflection plates, i.e., a lower deflection plate 21 and an upper deflection plate 27, and a liquid crystal layer 24 sandwiched between the TFT substrate 22 and the color filter substrate 26.

A TFT layer 23 is formed between the TFT substrate 22 and the liquid crystal layer 24. In the TFT layer 23, pixel electrodes as a sub pixel are arranged in a matrix and a TFT which is an active element is provided at every sub pixel. A color filter layer 25 including a common electrode is formed between the color filter substrate 26 and the liquid crystal layer 24. In the color filter 25, in the respective regions divided by the black matrix, a colored layer that converts white light into either red, green or blue faces the sub pixel.

The touch panel 30 is stacked on the upper deflection plate 27 which is a deflection plate adjacent to the color filter substrate 26 in the display panel 20. The touch panel 30 is constituted by a sensor layer 31 provided with a plurality of electrodes for detecting a change in electrostatic capacitance and a cover layer 32 stacked on the sensor layer 31, the cover layer 32 being an operating surface which is a surface of the display apparatus 10.

The sensor layer 31 is provided with a drive electrode 40 constituted by a plurality of second electrode wirings and a sensing electrode 50 constituted by a plurality of first electrode wirings. The drive electrode 40 is formed on a drive substrate 33 constituted such as by glass and a resin film. For example, the drive electrode 40 is formed by etching metal thin film such as copper film or silver film formed on the surface of the drive substrate 33. The sensing electrode 50 is formed on a sensing substrate 34 constituted such as by glass and a resin film. For example, the sensing electrode 50 is formed by etching metal thin film formed on the front surface of the sensing substrate 34. In other words, in the touch panel 30, a plurality of first electrode wirings that constitute the sensing electrode 50 are formed on the front surface of the sensing substrate 34 and a plurality of second electrode wirings that constitute the drive electrode 40 are formed on the reverse surface of the sensing substrate 34.

As for the sensor layer 31, the sensing substrate 34 with the sensing electrode 50 formed thereon is stacked on the drive substrate 33 with the drive electrode 40 formed thereon via an adhesive member so as to form the sensor layer 31. The sensing substrate 34 serves as a transparent dielectric layer disposed between the second electrode in the drive electrode 40 and the first electrode in the sensing electrode 50. A select signal that charges/ discharges an electrical charge in the sensing substrate 34 is applied to the second electrode in the drive electrode 40. A detection signal responding to an amount of electrostatic capacitance between the drive electrode 40 and the sensing electrode 50 is outputted from the sensing electrode 50, so that position detection can be performed by a controller (not shown).

The cover layer 32 is formed by tempered glass or synthetic resin and stacked onto the sensor layer 31 via an adhesive member. With reference to Fig. 2, a planar structure of the color filter layer 25 in the display panel 20 is described. Fig. 2 is a planar view showing a color filter substrate 26 with a color filter layer 25 formed thereon.

As shown in Fig. 2, in the color filter layer 25, a lattice-like pattern in which the vertical axis and the horizontal axis orthogonally cross with each other is formed by the black matrix 28. In a rectangular region divided by the black matrix 28, any one of colored layers 29 from among a red colored layer 29R a green colored layer 29G and a blue colored layer 29B. The colored layers 29 of the same color are arranged extending along one direction. When the colored layers 29 of the same color are set to be arranged extending along the Y-direction, the blue colored layer 29B, the green colored layer 29G and the red colored layer 29R are arranged repeatedly in this order in the X-direction perpendicular to the Y-direction. Specifically, in the color filter layer 25, the colored layers 29 of the same color are arranged to be extended along the Y-direction to form a stripe shape. On the colored layer 29, a common electrode which is not shown is formed on the entire surface.

Each of the respective colored layers 29 is assigned to the sub pixel in the TFT layer 23 and three colored layers 29 arranged extending along the X-direction constitute a single pixel. Each of the plurality of pixels is arranged extending along the Y-direction so as to form a stripe shape. In the color filter layer 25, a lattice-like pattern constituted by a plurality of rectangles arranged in a matrix divides each of the plurality of pixels arranged in a stripe shape to be a pixel pattern corresponding to the pixel arrangement. It should be noted that the pixel width Px which is a width of the pixel in the X-direction, and the pixel width Py which is a width of the pixel in the Y-direction are appropriately set depending on the resolution required for the display apparatus.

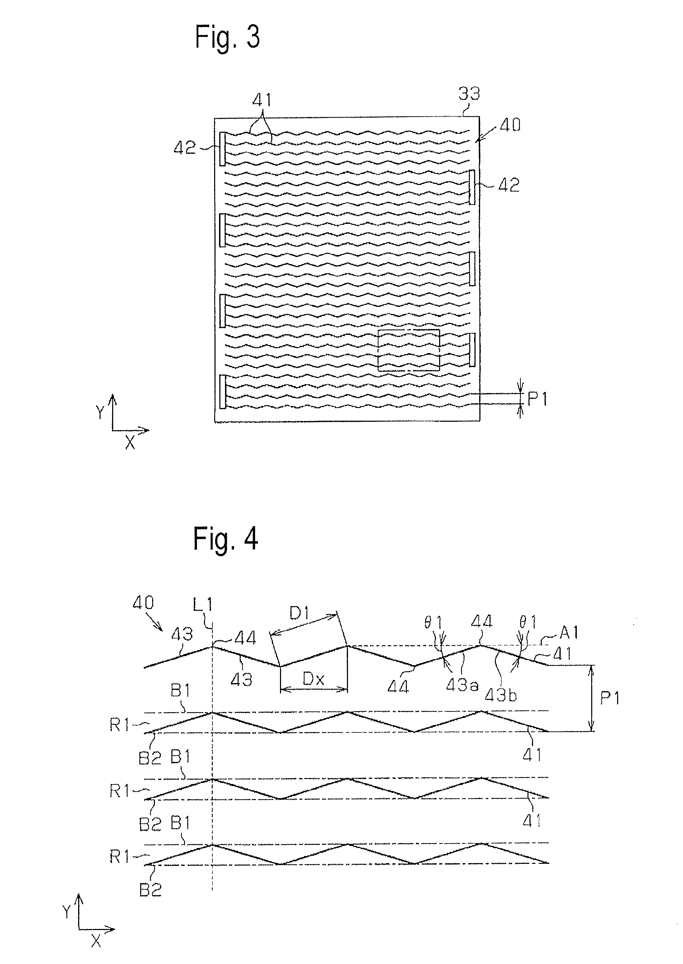

With reference to Figs. 3 to 6, a planar structure of the drive electrode 40 and a planar structure of the sensing electrode 50 are described. As shown in Fig. 3, the drive electrode 40 is constituted by a plurality of drive electrode wirings 41 as a second bending line which is formed as a polygonal line extended along the X-direction. Each of the plurality of drive electrode wirings 41 is arranged to have a constant interval P1 along the Y-direction perpendicular to the X direction.

The plurality of drive electrode wirings 41 are divided every four wirings in the Y-direction and the four drive electrode wirings 41 arranged repeatedly along the Y-direction are connected in parallel with respect to single terminal portion 42. Each of the plurality of terminal portions 42 is connected to a selection circuit that selects the drive electrode wirings 41. The four drive electrode wirings 41 connected to the single terminal portion 42 serve as a scanning electrode.

As shown in Fig. 4, each of the plurality of drive electrode wirings 41 is a combination of two types of linear sections 43 having mutually different inclinations and constituted by the two types of linear sections 43 arranged alternately and repeatedly extending along the X-direction and a bending section 44 (also referred to as a second bending section) serving as a portion at which the two types of linear sections 43 are coupled.

Each of the plurality of linear sections 43 has a length D1 extending along a direction along which the linear section 43 extends. One linear section 43a in the two types of linear sections 43 has an inclination of +θ1 degree with respect to the reference line A1 which is a linear line extending along the X-direction and the other linear section 43b has an inclination of -θ1 degree with respect to the reference line A1. Regarding each of the plurality of drive electrode wirings 41, one drive electrode wiring 41 is formed to have a shape in which the one drive electrode 41 is translated in the Y-direction. The bending sections 44 each having a portion at which the linear section 43a and the linear section 43b are coupled are arranged on a linear line L1 extending along the Y-direction in the plurality of drive electrode wirings 41.

The length D1 of the linear section 43 satisfies the following equation 1 and is set such that the length Dx of the linear section 43 in the X-direction is the same as the interval P1. The interval P1, an angle formed between the reference line A1 and the linear section 43 are appropriately set depending on the detection accuracy required for the touch panel 30 and the width of the pixel width Px and Py of the display panel 20.

$$Dx = D1 \cos \theta1 = P1 \ldots \text{equation 1}$$

In one drive electrode wiring 41, an auxiliary line B1 and an auxiliary line B2 are set as a linear line to connect the bending sections 44 arranged extending along the X-direction and a region sandwiched by the auxiliary line B1 and the auxiliary line B2 is set as a bending region R1. In this case, mutually adjacent bending regions R1 of the drive electrode wirings 41 are arranged extending along the Y-direction with intervals therebetween and the length D1 of the linear section 43, the interval P1 and the angle θ1 are set to avoid overlapping with each other. Here, in a case where the mutually adjacent bending regions R1 mutually overlap in the Y-direction, an operation position in the operation surface is detected by two mutually adjacent drive electrode wirings 41 so that the accuracy of detecting the operation position is degraded. In this respect, according to a configuration in which the mutually adjacent bending regions R1 are arranged extending along the Y-direction with intervals therebetween, degradation of the accuracy when detecting the operation position can be avoided.

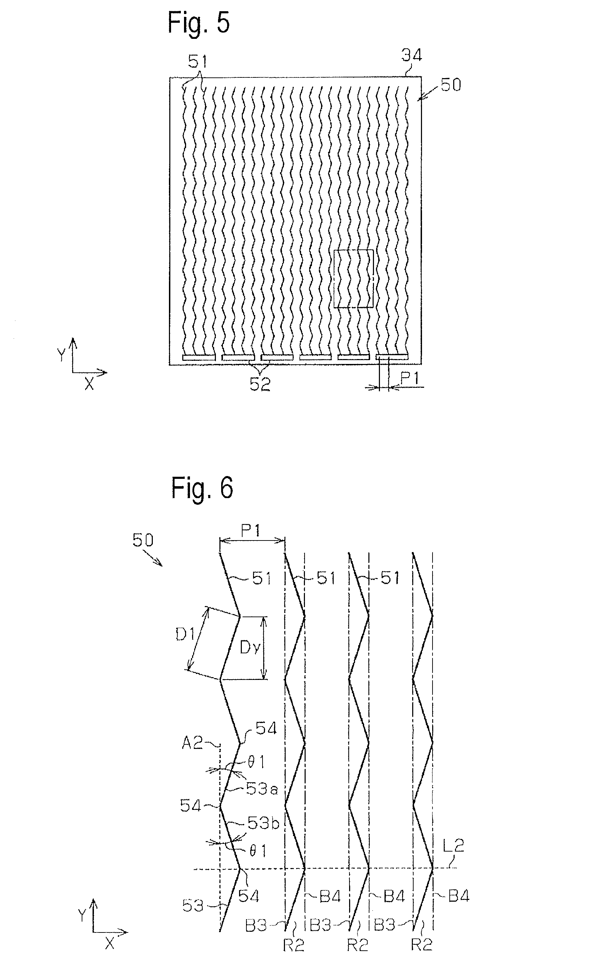

As shown in Fig. 5, as for the sensing electrode 50, compared to the drive electrode 40, the direction where each of the plurality of electrode wirings is extended and the direction where each of the plurality of electrode wirings are repeatedly arranged are different from that of the drive electrode 40. In other words, the sensing electrode 50 is constituted by a plurality of sensing electrode wirings 51 as a first bending line formed as a polygonal line extended along the Y-direction. The plurality of sensing electrode wirings 51 are arranged extending along the X-direction with constant intervals P1 therebetween. The interval P1 located between mutually adjacent sensing electrode wirings 51 may be the same as the interval P1 of the mutually adjacent drive electrode wirings 41 or may be different from the one of the mutually adjacent drive electrode wirings 41. The same applies to the length D1 of the linear section 43 and the angle θ.

The plurality of sensing electrode wirings 51 are divided every four wirings along the X-direction and the four sensing electrode wirings 51 arranged repeatedly along the X-direction are connected in parallel with respect to one single terminal portion 52. Each of the plurality of terminal portions 52 is connected to a detection circuit that detects a change in electrostatic capacitance. The four sensing electrode wirings 51 connected to the single terminal portion 52 serve as a detection electrode.

As shown in Fig. 6, each of the plurality of sensing electrode wirings 51 is a combination of two types of linear sections 53 having mutually different inclinations and constituted by the two types of linear sections 53 arranged alternately and repeatedly extending along the Y-direction and a bending section 54 as a first bending section serving as a portion at which the two types of linear sections 53 are coupled.

Each of the plurality of linear sections 53 has a length D1 along a direction where the linear section 53 extends. One linear section 53a in the two types of linear sections 53 has an inclination of $+\theta1$ degree with respect to the reference line A2 which is a linear line extending along the Y-direction and the other linear section 53b has an inclination of $-\theta1$ degree with respect to the reference line A2. Regarding each of the plurality of sensing electrode wirings 51, one sensing electrode wiring 51 is formed to have a shape in which the one sensing electrode wiring 51 is translated in the X-direction. The bending sections 54 each having a portion at which the linear section 53a and the linear section 53b are coupled are arranged on a linear line L2 extending along the X-direction in the plurality of sensing electrode wirings 51.

The length D1 of the linear section 53 satisfies the following equation 2 and is set such that the length Dy of the linear section 53 in the Y-direction is the same as the interval P1. The interval P1 and an angle formed between the reference line A2 and the linear section 53 are appropriately set depending on the detection accuracy required for the touch panel 30 and the width of the pixel width Px and Py of the display panel 20.

$$Dy = D1 \cos \theta1 = P1 \ldots \text{equation 2}$$

In one sensing electrode wiring 51, a linear line that connects the bending sections 54 arranged extending along the Y-direction is set as an auxiliary line B3 and an auxiliary line B4, and a region sandwiched by the auxiliary line B3 and the auxiliary line B4 is set as a bending region R2. In this case, mutually adjacent bending regions R2 of the sensing electrode wirings 51 are arranged extending along the X-direction with intervals therebetween and the length D1 of the linear section 53, the interval P1 and the angle $\theta1$ are set to avoid overlapping each other. Here, in a case where the mutually adjacent bending regions R2 mutually overlap in the X-direction, two mutually adjacent sensing electrode wirings 51 are assigned to one operation position so that an accuracy for detecting the operation position is degraded. In this respect, according to a configuration in which the mutually adjacent bending regions R2 are arranged extending along the X-direction with intervals therebetween, degradation of the accuracy of detecting the operation position can be avoided.

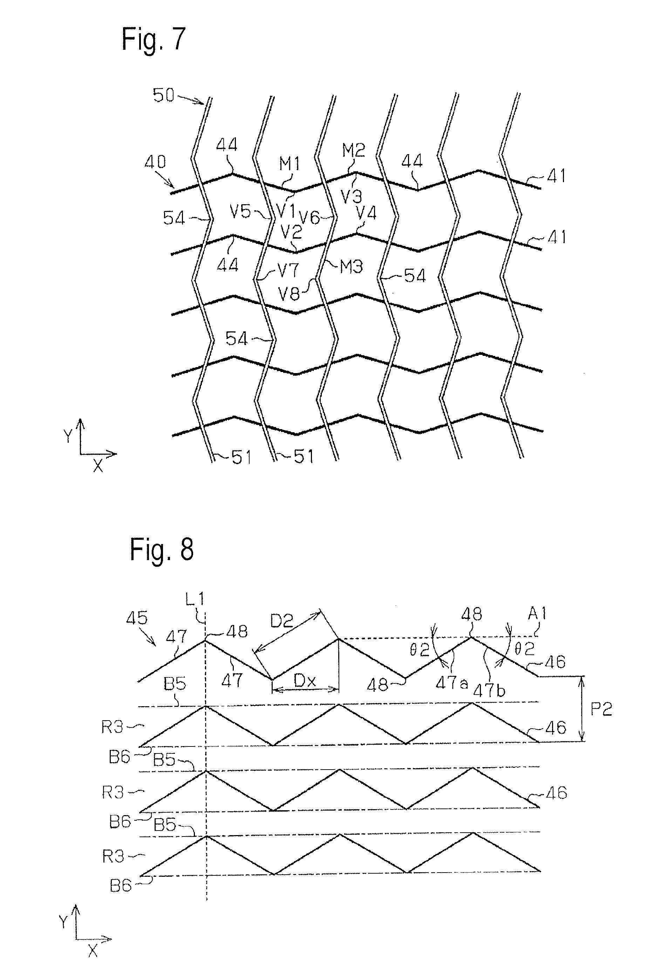

With reference to Fig. 7, an electrode pattern formed by the drive electrode 40 and the sensing electrode 50 is described. In Fig. 7, for convenience of explanation, viewing from the front surface of the sensing substrate 34 which is a transparent dielectric layer, that is, viewing from the surface of the display apparatus 10, each of the plurality of sensing electrodes 50 arranged above the sensing substrate 34 are shown as white hollow lines and each of the plurality of drive electrode 40 arranged below the sensing substrate 34 are shown as solid lines.

As shown in Fig. 7, in the electrode pattern, each of the plurality of bending sections 44 of the drive electrode wiring 41 are arranged at locations with which none of sensing electrode wirings 51 are overlapped and face the interval between the two mutually adjacent sensing electrode wirings 51. Each of the plurality of bending sections 54 of the sensing electrode wiring 51 are arranged at locations with which none of drive electrode wirings 41 are overlapped and face the interval between the two mutually adjacent drive electrode wirings 41.

Specifically, the drive electrode 40 and the sensing electrode 50 are arranged such that the bending section of the electrode wiring at one electrode is disposed at a position not to overlap with the electrode wiring at the other electrode. Each of the drive electrode wirings 41 and each of the sensing electrode wirings 51 are overlapped at the linear section 43 of the drive electrode wiring 41 and the linear section 53 of the sensing electrode wirings 51. With two mutually adjacent drive electrode wirings 41 and two mutually adjacent sensing electrode wirings 51, four types of octagons having two reflex angles among interior angles thereof are formed. When viewing from the front surface of the sensing substrate 34, an electrode pattern is formed such that these four types of octagons are arranged extending along the X-direction and the Y-direction.

Next, effects of the above-described touch panel 30 and the display apparatus 10 will be described.

In the touch panel 30, an electrode pattern is formed by the drive electrode 40 and the sensing electrode 50, in which four types of octagons are arranged extending along the X-direction and the Y-direction. Therefore, compared to a conventional electrode pattern having rectangles arranged in a matrix, variation will happen on the regularity of the pattern.

For example, in an octagon M1, a vertex V1 protruded towards the -Y-direction is formed by the bending section 44 of one drive electrode wiring 41 and a vertex V2 protruded towards the -Y-direction is formed by the bending section 44 of the other drive electrode wiring 41. Meanwhile, in an octagon M2 adjacent to the octagon M1, a vertex V3 protruded towards +Y-direction is formed by the bending section 44 of one drive electrode wiring 41 and a vertex V4 protruded towards +Y-direction is formed by the bending section 44 of the other drive electrode wiring 41. In the octagon M1 and the octagon M2 which are adjacent to each other in the X-direction, the vertex V1 and the vertex V3 formed by one drive electrode wiring 41 are formed at mutually different positions in the Y-direction. Moreover, in the octagon M1 and the octagon M2 which are mutually adjacent in the X-direction, the vertex V2 and the vertex V4 formed by the other drive electrode wiring 41 are formed at mutually different positions in the Y-direction.

For example, in an octagon M1, a vertex V5 protruded towards the + X-direction is formed by the bending section 54 of one sensing electrode wiring 51 and a vertex V6 protruded towards +X-direction is formed by the bending section 54 of the other sensing electrode wiring 51. Meanwhile, in an octagon M3 adjacent to the octagon M1, a vertex V7 protruded towards the -X-direction is formed by the bending section 54 of one sensing electrode wiring 51 and vertex V8 protruded towards the -X-direction is formed by the bending section 54 of the other sensing electrode wiring 51. In the octagon M1 and the octagon M3 which are adjacent to each other in the Y-direction, the vertex V5 and the vertex V7 formed by one sensing electrode 51 are formed at mutually different positions in the X-direction. Moreover, in the octagon M1 and the octagon M3 which are mutually adjacent in the Y-direction, the vertex V6 and the vertex V8 formed by the other sensing electrode wiring 51 are formed at mutually different positions in the X-direction.

As a result, using the electrode pattern formed by the drive electrode 40 and the sensing electrode 50, compared to an electrode pattern in which rectangles are arranged extending along the X-direction and the Y-direction, the regularity of the pattern is lower in both X-direction and Y-direction.

Here, when an electrode pattern in which rectangles are arranged extending along the X-direction and the Y-direction and a pixel pattern in which rectangles are arranged extending along the X-direction and the Y-direction are overlapped, patterns having high regularity are overlapped with each other, whereby interference fringes is occurred due to shift of the period thereof. On the other hand, when using an electrode pattern formed in the touch panel 30, since the regularity of the pattern thereof is low compared to the above-described electrode pattern, occurrence of the interference fringes is reduced when the display panel 20 and the touch panel are stacked.

In other words, in the electrode pattern in which rectangles are arranged extending along the X-direction and the Y-direction, the area that one electrode wiring occupies is limited to only an area corresponding to the line width of the electrode wiring in a direction where the electrode wiring is arranged. On the other hand, when using an electrode pattern formed in the touch panel 30, since the electrode wiring is a bending line, the area that one electrode wiring occupies is widened to be a bending region R1 or a bending region R2 in a direction where the electrode wirings are arranged. Accordingly, when the display panel 20 and the touch panel 30 are overlapped, a contour of the pattern formed by a pixel pattern of the display panel 20 and an electrode pattern of the touch panel 30 becomes unclear. As a result, the occurrence of interference fringes can be reduced.

Since the occurrence of interference fringes is reduced, degradation of the image quality of the display apparatus 10 is avoided. Moreover, to reduce the interference fringes, it is not necessary to provide such as films in the display apparatus 10. Hence, the manufacturing steps for the display apparatus 10 can be simplified. In particular, since the regularity of the electrode pattern formed in the touch panel 30 is not high, displacement of positions between the drive electrode 40 and the sensing electrode 50 and displacement of positions between the touch panel 30 and the display panel 20 are less likely to influence the effects of reducing the interference fringes. Therefore, when the drive electrode 40 and the sensing electrode 50 are stacked or the touch panel 30 and the display panel 20 are stacked, alignment of positions of the objects to be stacked does not require such high accuracy, so that the display apparatus can easily be manufactured. Further, since the electrode pattern formed in the touch panel 30 is configured by a combination of linear sections, compared to an electrode pattern including bending lines, the electrode pattern can easily be designed and manufactured.

In an electrode pattern in which rectangles or rhobmbuses are arranged extending along the X-direction and the Y-direction, undulations or interference fringes occur in the electrode pattern because of slight shifts in overlap between the drive electrode and the sensing electrode or because of slight errors in intervals between the electrode wirings. However, according to the electrode pattern formed in the touch panel 30, compared to an electrode pattern in which rectangles or rhobmbuses are arranged extending along the X-direction and the Y-direction, the regularity of the pattern in both X-direction and the Y-direction becomes low so that undulations or interference fringes in the electrode pattern can be reduced.

[Example]

A touch panel according to an example was produced in which dimensions of an electrode pattern were set as the following electrode condition. Also, a display panel according to the example was produced in which dimensions of a pixel pattern were set as the following pixel condition. The touch panel and the display panel were stacked so as to produce an example display apparatus. An evaluation was applied to the display apparatus in which occurrence of interference of fringes was evaluated by a visual inspection as a sensory evaluation. As a result, occurrence of interference fringes was appropriately reduced within a range that satisfies the following electrode condition and the pixel conditions.

[Electrode condition]

Interval P1: ranges from 0.4 mm to 0.64 mm
Angle $\theta1$: ranges from 27. 5 degrees to 40.0 degrees
Length D1: D1 = P1/ cos $\theta1$

[Pixel condition]

Pixel width Px, Pixel width Py : (84 $\mu$m, 252 $\mu$m), (60 $\mu$m, 179 $\mu$m)
: (83 $\mu$m, 248 $\mu$m), (91 $\mu$m, 273 $\mu$m)
As described above, according to the first embodiment, following effects can be obtained.

(1) Since the regularity is low in the electrode pattern formed in the touch panel 30, the occurrence of interference fringes is reduced in a configuration in which a display panel 20 and the touch panel 30 are stacked on each other.
(2) Since the regularity is low in a lattice-like electrode pattern formed by the drive electrode 40 and the sensing electrode 50, undulation or interference fringes in the electrode pattern can be reduced.
(3) When the touch panel 30 and the display panel 20 are stacked, since positions of objects to be stacked do not require high alignment accuracy, the display apparatus 10 can easily be manufactured.
(4) Since the electrode pattern formed in the touch panel 30 is a combination of linear sections, compared to a configuration in which the electrode pattern includes complicated patterns, the electrode pattern can easily be designed and manufactured.

(Second Embodiment)

With reference to Figs. 8 to 10, regarding a touch panel and a display apparatus according to the second embodiment, differences from the one of the first embodiment will mainly be described. In the second embodiment, planar structures of the drive electrode and the sensing electrode differ from that of the first embodiment. Accordingly, planar structures of respective electrode wirings will mainly be described and configurations similar to the first embodiment are labeled with the same reference numbers and explanation thereof is omitted.
As shown in Fig. 8, a drive electrode 45 is constituted by a plurality of drive electrode wirings 46 as a second bending line which is formed as a polygonal line extended along the X-direction. Each of the plurality of drive electrode wirings 56 is arranged extending along the Y-direction perpendicular to the X-direction with a constant interval P2.
Each of the plurality of drive electrode wirings 46 is a combination of two types of linear sections having mutually different inclinations and constituted by the two types of linear sections 47 arranged alternately and repeatedly extending along the X-direction and by a bending section 48 as a second bending section serving as a portion at which the two types of linear sections 47 are coupled.

Each of the linear sections 47 has a length D2 along a direction where the linear section 47 extends. One linear section 47a in the two types of linear sections 47 has an inclination of +$\theta2$ with respect to the reference line A1 which is a linear line extending along the X-direction and the other linear section 47b has an inclination of -$\theta2$ degree with respect to the reference line A1. Regarding each of the plurality of drive electrode wirings 46, one drive electrode wiring 46 is formed to have a shape in which the one drive electrode wiring 46 is translated in the Y-direction. The bending sections 48 each having a portion at which the linear section 47a and the linear section 47b are coupled are arranged on a linear line L1 extending along the Y-direction in the plurality of drive electrode wirings 46.
The length D2 of the linear section 47 satisfies the following equation 3 and is set such that the length Dx of the linear section 47 in the X-direction is longer than the interval P2. The interval P2 and an angle formed between the reference line A1 and the linear section 47 are appropriately set depending on the detection accuracy required for the touch panel 30 and the width of the pixel width Px and Py.

$$Dx = D2 \cos \theta2 > P2 \ldots \text{equation 3}$$

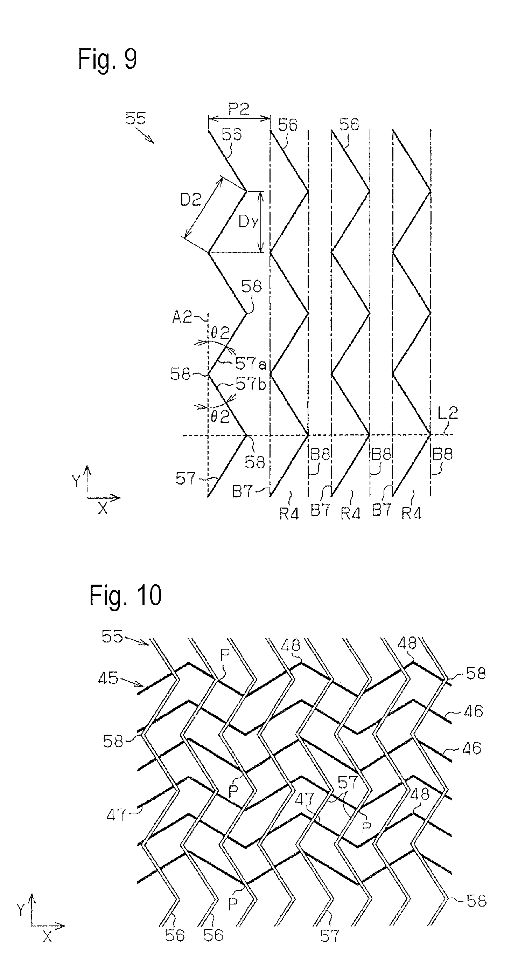

In one drive electrode wiring 46, an auxiliary line B5 and an auxiliary line B6 are set to connect the bending sections 48 arranged extending along the X-direction and a region sandwiched by the auxiliary line B5 and the auxiliary line B6 is set as a bending region R3. In this case, also in the present embodiment, mutually adjacent bending regions R3 of the drive electrode wirings 46 are arranged extending along the Y-direction with intervals therebetween and the length D2 of the linear section 47, the interval P2 and the angle $\theta2$ are set to avoid overlapping each other.
As shown in Fig. 9, as for the sensing electrode 55, compared to the drive electrode 45, the direction where the plurality of electrode wirings are extended and the direction where each of the plurality of the electrode wirings are arranged are different from the drive electrode 45. In other words, the sensing electrode 55 is constituted by a plurality of sensing electrode wirings 56 as a first bending line formed as a polygonal line extended along the Y-direction. The plurality of sensing electrode wirings 56 are arranged extending along the X-direction with constant intervals P2 therebetween. The interval P2 located between mutually adjacent sensing electrode wirings 56 may be the same as the interval P2 of the mutually adjacent drive electrode wirings 46.
Each of the plurality of sensing electrode wirings 56 is also a combination of two types of linear sections 57 having mutually different inclinations and constituted by the two types of linear sections 57 arranged alternately and repeatedly extending along the Y-direction and a bending section 58 as a first bending section serving as a portion at which the two types of linear sections 53 are coupled.

Each of the plurality of linear sections 57 has a length D2 along a direction where the linear section 57 extends. One type of linear section 57a of the two types of linear sections 57 has an inclination of $+\theta 2$ degrees with respect to the reference line A2 which is a linear line extending along the Y-direction and the other linear section 57b has an inclination of $-\theta 2$ degrees with respect to the reference line A2. Regarding each of the plurality of sensing electrode wirings 56, one sensing electrode wiring 56 is formed to have a shape in which the one sensing electrode wiring 56 is translated in the X-direction. The bending sections 58 each having a portion at which the linear section 57a and the linear section 57b are coupled are arranged on a linear line L2 extending along the X-direction in the plurality of sensing electrode wirings 56.

The length D2 of the linear section 57 satisfies the following equation 4 and is set such that the length Dy of the linear section 57 in the Y-direction is longer than the interval P2. The interval P2 and an angle formed between the reference line A2 and the linear section 57 are appropriately set depending on the detection accuracy required for the touch panel 30 and the width of the pixel width Px and Py of the display panel 20.

$$Dy = D2 \cos \theta 2 > P2 \dots \text{equation 4}$$

In one sensing electrode wiring 56, an auxiliary line B7 and an auxiliary line B8 are set to connect the bending sections 58 arranged extending along the Y-direction and a region sandwiched by the auxiliary line B7 and the auxiliary line B8 is set as a bending region R4. In this case, also in the present embodiment, mutually adjacent bending regions R4 of the electrode wirings 56 are arranged extending along the X-direction with intervals therebetween and the length D2 of the linear section 57, the interval P2 and the angle $\theta 2$ are set to avoid overlapping from each other.

With reference to Fig. 10, an electrode pattern formed by the drive electrode 45 and the sensing electrode 55 is described. In Fig. 10, for convenience of explanation, viewing from the surface of the display apparatus 10, each of the plurality of sensing electrodes 55 arranged above the sensing substrate 34 are shown as white hollow lines and each of the plurality of drive electrode 45 arranged below the sensing substrate 34 are shown as solid lines.

As shown in Fig. 10, in the electrode pattern, at least a part of the plurality of bending sections 48 of the drive electrode wiring 46 are arranged at locations with which none of sensing electrode wirings 56 are overlapped and face the interval between the two mutually adjacent sensing electrode wirings 56. At least a part of the plurality of bending sections 58 of the sensing electrode wiring 56 are arranged at locations with which none of drive electrode wirings 46 are overlapped and face the interval between the two mutually adjacent drive electrode wirings 46.

According to the configuration in which the above described equations 3 and 4 are satisfied, a quadrangle pattern divided by two mutually adjacent linear sections 47 and two mutually adjacent linear sections 57 is included in a part of electrode pattern. Also, according to the configuration in which the above described equations 3 and 4 are satisfied, a point P at which the bending section 48 in the drive electrode wiring 46 and the sensing electrode 56 are overlapped, constitutes a part of electrode wiring. Moreover, according to the configuration in which the above described equations 3 and 4 are satisfied, a point P at which the bending section 58 in the sensing electrode wiring 56 and the drive electrode wiring 46 are overlapped constitutes a part of electrode wiring. In a pattern in which a polygon vertex is a point P, the number of vertexes is less than eight.

Eventually, the electrode pattern formed in the touch panel 30 includes two or more types of polygons having mutually different number of vertexes within the range of 4 to 8 vertexes inclusive. The electrode pattern formed in the touch panel 30 also includes a plurality of polygons in which the number of vertexes is the same and shapes are mutually different.

Next, effects of the above-described touch panel 30 and the display apparatus 10 will be described as follows. In the touch panel 30, a lattice-like electrode pattern is formed by the drive electrode 45 and the sensing electrode 55. The lattice-like electrode pattern is constituted by a polygon having 4 to 8 vertexes. Therefore, compared to a conventional type electrode pattern having a lattice-like pattern in which rectangles are arranged in a matrix, or an electrode pattern in which octagons described in the first embodiment are arranged, the regularity of the pattern becomes even lower. As a result, occurrence of the interference fringes can be further reduced when the display panel 30 and the touch panel 30 are overlapped.

As described above, according to the second embodiment, in addition to effects described in the above (1) to (4), the following effects can be obtained.

(5) The electrode pattern formed in the touch panel 30 includes two or more types of polygons having mutually different numbers of vertexes among polygons having 4 to 8 vertexes so that the regularity of the electrode pattern becomes low. Therefore, occurrence of interference fringes can be further reduced.

(6) The electrode pattern formed in the touch panel 30 includes polygons having the same number of vertexes and mutually different shapes so that the regularity of the electrode pattern becomes even lower.

(Modifications)

The above-described embodiments can be implemented, being modified as follows.

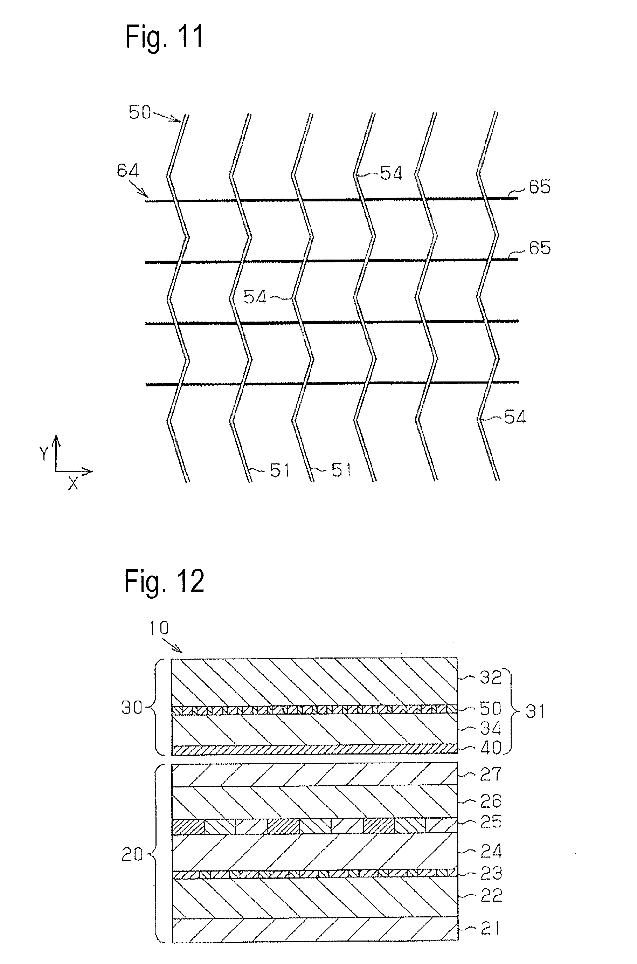

The bending section may include either electrode wirings or sensing electrode wirings. As shown in Fig. 11, for example, the drive electrode 64 may be constituted by a plurality of drive electrode wirings 65 which are linear lines extended along the X-direction and the sensing electrode 50 may be constituted, similar to that of the first embodiment, by a plurality of sensing electrode wirings 51 having linear sections 53 and bending sections 54. In this case, each of the plurality of bending sections 54 in the sensing electrode wirings 51 is located to face the interval between two mutually adjacent drive electrode wirings 65 and not to overlap with the drive electrode 65. According to these configurations, similar effects as described in the above (1) to (4) can be obtained.

The sensing electrode wiring may be constituted by a plurality of sensing electrode wirings extended along the Y-direction. The drive electrode may be constituted by, similar to the first embodiment, a plurality of drive electrode wirings 41 having the linear section 43 and the bending section 44. In this case, each of the plurality of bending sections 44 in the drive electrode wirings 41 faces the interval between two mutually adjacent sensing electrode wirings and is located at a portion not to overlap with the sensing electrode wiring.

A part of the plurality of drive electrode may be a linear line extended along the X-direction or a part of the plurality of sensing electrode may be a linear line extended along the Y-direction. In other words, as long as an electrode wiring having a bending section is included in the electrode wiring that constitutes the drive electrode and the sensing electrode, other electrode wiring may not include the bending section. According to these configurations, similar effects as described in the above (1) to (4) can be obtained.

The length of an interval between mutually adjacent drive electrode wirings and the length of an interval between mutually adjacent sensing electrode wirings may be different from each other. Further, an angle formed between the drive electrode wiring and the reference line A1 and an angle formed between the sensing electrode wiring and the reference line A2 may be different from each other. Moreover, a length of the linear section of the drive electrode wiring and a length of the linear section of the sensing electrode wiring may be different from each other. Furthermore, an angle formed between the drive electrode wiring and the sensing electrode wiring may be an angle other than 90 degrees, when viewing from the front surface of the transparent dielectric layer. That is, when viewing from the of the transparent dielectric layer, a configuration in which each of the plurality of first electrode wirings crosses each of the plurality of second electrode wirings and at least a part of the plurality of bending sections faces an interval between the second electrode wirings may be employed.

In the drive electrode, the length of the interval between mutually adjacent drive electrode wirings may have two or more mutually different values and an absolute value of the angle formed between the linear section and the reference line A1 may have two or more mutually different values. Further, in the drive electrode, the length of the linear section of the drive electrode wirings may have two or more mutually different values.

In the sensing electrode, the length of the interval between mutually adjacent sensing electrode wirings may have two or more mutually different values and an absolute value of the angle formed between the sensing electrode wiring and the reference line A2 may have two or more mutually different values. Further, in the drive electrode, the length of the linear section of the sensing electrode wirings may have two or more mutually different values.

In one drive electrode wiring, the length of the interval between mutually adjacent drive electrode wirings may have two or more mutually different values and an absolute value of the angle formed between the linear section and the reference line A1 may have two or more mutually different values. Further, in the drive electrode wiring, the length of the linear section of the drive electrode wirings may have two or more mutually different values.

In the sensing electrode wiring, the length of the interval between mutually adjacent sensing electrode wirings may have two or more mutually different values and an absolute value of the angle formed between the sensing electrode wiring and the reference line A2 may have two or more mutually different values. Further, in the drive electrode wiring, length of the linear section of the drive electrode wirings may have two or more mutually different values.

In one electrode wiring, a part of the plurality of bending sections may be a curve having a curvature and the rest of the plurality of bending sections may be a coupled portion of two linear sections. In two electrodes, a part of the plurality of electrode wirings may be formed such that the bending section is a curve having a curvature and rest of the plurality of electrode wirings may be formed such that the bending section is a coupled portion of two linear sections. In a configuration in which a part of the plurality of bending sections is a curve having a curvature, an electrode pattern formed in the touch panel 30 is constituted by a polygon different from a quadrangle and a pseudo polygon. According to these configurations, since the regularity of the electrode pattern is low, similar effects as described in the above (1) to (6) can be obtained.

According to the first embodiment, a part of the plurality of drive electrode wirings may have a configuration that satisfies equation 3 or a part of the plurality of sensing electrode wirings may have a configuration that satisfies the equation 4. In at least a part of the plurality of electrode wirings, a relationship among length of the linear section D1, the interval P1, the angle θ1 may satisfy a condition D1 cosθ1 < P1. Also, in at least some of the plurality of electrode wirings, relationship among length of the linear section D2, the interval P2, the angle θ2 may satisfy D2 cosθ2 < P2. In other words, when viewing from the front surface of the transparent dielectric layer, a configuration in which each of the plurality of first electrode wirings crosses each of the plurality of second electrode wirings and at least a part of the plurality of bending sections faces the interval of the second electrode wirings may be used.

According to the first and second embodiments, the drive electrode 40 is formed on the front surface of the drive substrate 33 and the sensing electrode 50 is formed on the front surface of the sensing substrate 34. Alternatively, in the manufacturing step of the touch panel 30, one transparent dielectric layer may be used for a substrate. The drive electrode may be formed on the reverse side of the substrate and the sensing electrode may be formed on the front surface of the substrate. For example, as shown in Fig. 12, the sensing electrode 50 may be formed on the front surface of the sensing substrate 34 and the drive electrode 40 may be formed on the reverse surface of the sensing substrate 34.

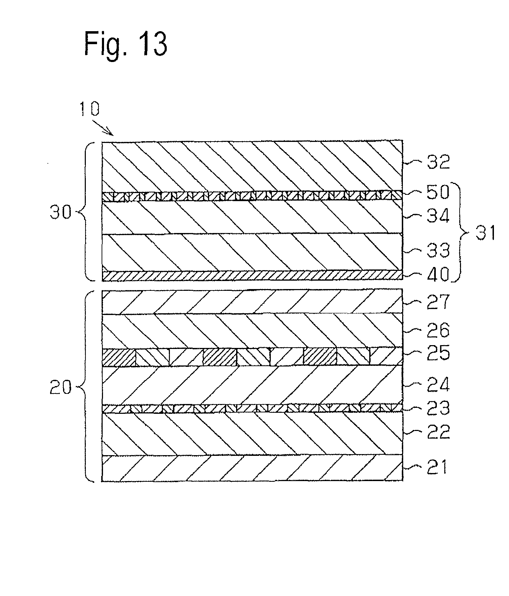

In the touch panel 30, a configuration in which the drive electrode and the sensing electrode sandwiches a transparent dielectric layer which is different from a substrate used in the manufacturing step of the drive electrode and the sensing electrode, may be employed. For example, as shown in Fig. 13, the sensing electrode 50 may be formed on the front surface of the sensing substrate 34 and the drive electrode 40 may be formed on the reverse surface of the drive substrate 33 and then the sensing substrate 34 may be stacked on the drive substrate 33 via an adhesive member.

The sensing electrode wiring, as a second electrode wiring, may be formed on the reverse surface of the transparent dielectric layer and the drive electrode wiring, as a first electrode wiring, may be formed on the front surface of the transparent dielectric layer. In other words, the touch panel 30 may be a configuration in which a plurality of first electrode wirings are arranged with intervals along the first direction on the front surface of the transparent dielectric layer, and a plurality of second electrode wirings are arranged with intervals along the second direction on the reverse surface of the transparent dielectric layer.

The pixel arrangement in the display panel 20 is not limited to the stripe shape. Instead, the pixel arrangement may be a mosaic shape or a delta shape. While the display panel 20 is provided with pixels arranged periodically, a periodical pattern is formed by a portion that divides pixels. In a display apparatus having a display panel and a touch panel 30 which are stacked on each other, occurrence of interference fringe is reduced.

A display element used for the display panel 20 is not limited to a liquid crystal element. However, for example, a self-luminous element such as organic EL (electroluminescent) device may be used as a display element. In other words, the display panel 20 may have a configuration in which each of the plurality of pixels is divided to form a lattice shape. While the display element has a configuration in which each of the plurality of pixels is divided to form a lattice shape, a periodical pattern is formed in the display panel. Therefore, in a display apparatus having a display panel and a touch panel 30 which are stacked on each other, occurrence of interference fringe is reduced.

[Reference Signs List]

    10: display apparatus
    20: display panel
    21: lower deflection plate
    22: TFT substrate
    23: TFT layer
    24: liquid crystal layer
    25: color filter layer
    26: color filter substrate
    27: upper deflection plate
    28: black matrix
    29: colored layer
    30: touch panel
    31: sensor layer
    32: cover layer
    33: drive substrate
    34: sensing substrate
    40, 45, 64: drive electrode
    41, 46, 65: drive electrode wiring
    42, 52: terminal portion
    43, 43a, 43b, 47, 47b, 53, 53a, 53b, 57, 57a, 57b: linear section
    44, 48, 54, 58: bending section
    50, 55: sensing electrode
    51, 56: sensing electrode wiring

**Claims**

**1.** A touch panel comprising:

    a transparent dielectric layer;
    a plurality of first electrode wirings arranged, on a front surface of the transparent dielectric layer, repeatedly along a first direction with intervals therebetween; and
    a plurality of second electrode wirings arranged, on a reverse surface of the transparent dielectric layer, repeatedly along a second direction with intervals therebetween,
    wherein
    at least a part of the plurality of first electrode wirings is a bending line having a plurality of bending sections arranged repeatedly in a direction along which the first electrode wiring extends;

when viewing from the front surface of the transparent dielectric layer, each of the plurality of first electrode wirings crosses each of the plurality of second electrode wirings and

at least a part of the plurality of bending sections faces the intervals between the second electrode wirings.

2. The touch panel according to claim 1, wherein
the transparent dielectric layer is a first transparent dielectric layer;
the touch panel further comprises a second transparent dielectric layer; and
the plurality of second electrode wirings are formed on a front surface of the second transparent dielectric layer.

3. The touch panel according to claim 1, wherein
the transparent dielectric layer includes plural layers of transparent dielectric layer .

4. The touch panel according to any one of claims 1 to 3, wherein
the bending line is a polygonal line formed by a plurality of linear sections combined with each other; and
when viewing from the surface of the transparent dielectric layer, a pattern divided by two mutually adjacent first electrode wirings and two mutually adjacent second electrode wirings includes a polygon having five or more vertexes.

5. The touch panel according to any one of claims 1 to 4, wherein
the bending line is a polygonal line formed by a plurality of linear sections combined with each other; and
when viewing from the front surface of the transparent dielectric layer, a pattern divided by two mutually adjacent first electrode wirings and two mutually adjacent second electrode wirings includes two or more types of polygons having mutually different number of vertexes among polygons having four to eight vertexes.

6. The touch panel according to any one of claims 1 to 5, wherein
the bending section is a first bending section;
the bending line is a first bending line;
at least a part of the plurality of second electrode wirings is a second bending line having a plurality of second bending sections arranged repeatedly extending along a direction where the second electrode wiring extends; and
when viewing from the front surface of the transparent dielectric layer, at least a part of the plurality of second bending lines faces the intervals between the first electrode wirings.

7. A display apparatus provided with a display panel having pixels arranged in matrix and a touch panel stacked on the display panel, the touch panel comprising:

a transparent dielectric layer;
a plurality of first electrode wirings arranged, on a front surface of the transparent dielectric layer, repeatedly along a first direction with intervals therebetween; and
a plurality of second electrode wirings arranged, on a reverse surface of the transparent dielectric layer, repeatedly along a second direction with intervals therebetween, wherein
at least a part of the plurality of first electrode wirings is a bending line having a plurality of bending sections arranged repeatedly in a direction along which the first electrode wiring extends;
when viewing from the front surface of the transparent dielectric layer, each of the plurality of first electrode wirings crosses each of the plurality of second electrode wirings and
at least a part of the plurality of bending sections faces the intervals between the second electrode wirings.

8. The display apparatus according to claim 7, wherein
the transparent dielectric layer is a first transparent dielectric layer;
the touch panel further comprises a second transparent dielectric layer; and
the plurality of second electrode wirings are formed on a front surface of the second transparent dielectric layer.

9. The display apparatus according to claim 7, wherein
the transparent dielectric layer includes plural layers of transparent dielectric layer .

10. The display apparatus according to any one of claims 7 to 9, wherein
the bending line is a polygonal line formed by a plurality of linear sections combined from each other; and
when viewing from the front surface of the transparent dielectric layer, a pattern divided by two mutually adjacent first electrode wirings and two mutually adjacent second electrode wirings includes a polygon having five or more vertexes.

11. The display apparatus according to any one of claims 7 to 10,
wherein the bending line is a polygonal line formed by a plurality of linear sections combined from each other; and
when viewing from the front surface of the transparent dielectric layer, a pattern divided by two mutually adjacent first electrode wirings and two mutually adjacent second electrode wirings includes two or more types of polygons having mutually different number of vertexes among polygons having four to eight vertexes.

**12.** The display apparatus according to any one of claims 7 to 11,
the bending section is a first bending section;
the bending line is a first bending line;
at least a part of the plurality of second electrode wirings is a second bending line having a plurality of second bending sections arranged repeatedly along a direction where the second electrode wiring extends; and
when viewing from the front surface of the transparent dielectric layer, at least a part of the plurality of second bending lines faces the intervals between the first electrode wirings.

# Fig. 1

# Fig. 2

# Fig. 3

# Fig. 4

## Fig. 5

## Fig. 6

## Fig. 7

## Fig. 8

Fig. 9

Fig. 10

Fig. 11

Fig. 12

Fig. 13

<table>
<tr><td colspan="2"><strong>INTERNATIONAL SEARCH REPORT</strong></td><td>International application No.<br>PCT/JP2014/051475</td></tr>
</table>

A. CLASSIFICATION OF SUBJECT MATTER
*G06F3/041(2006.01)i, G06F3/044(2006.01)i*

According to International Patent Classification (IPC) or to both national classification and IPC

B. FIELDS SEARCHED

Minimum documentation searched (classification system followed by classification symbols)
G06F3/041, G06F3/044

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | US 2011/0102361 A1  (Harald PHILIPP),<br>05 May 2011 (05.05.2011),<br>paragraphs [0030], [0039] to [0040], [0057];<br>fig. 2 to 3, 8<br>& DE 102010043055 A1    & CN 102053751 A<br>& TW 201122958 A | 1–12 |

☐ Further documents are listed in the continuation of Box C.          ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>02 April, 2014 (02.04.14) | Date of mailing of the international search report<br>15 April, 2014 (15.04.14) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 950 186 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012079238 A